# EUROPÄISCHE PATENTSCHRIFT

(11) **EP 1 391 735 B1**
(45) Veröffentlichungstag und Bekanntmachung des Hinweises auf die Patenterteilung: **03.10.2012**
(21) Anmeldenummer: 03010995.3
(22) Anmeldetag: 16.05.2003
(51) Int. Cl.: G01P 3/488, G01P 3/48, G01P 3/49, G01P 13/04, G01F 1/075

(54) **Auswerteschaltung für Schwingkreissensoren**
Evaluation circuit for oscillator circuit sensors
Circuit d'évaluation pour des capteurs à circuit oscillant

(30) Priorität: 22.08.2002 DE 10238405
(43) Veröffentlichungstag der Anmeldung: 25.02.2004
(73) Patentinhaber: Techem Energy Services GmbH, 65760 Eschborn (DE)
(72) Erfinder: Alwon, Hartmut, 90574 Rosstal (DE)
(74) Vertreter: KEIL & SCHAAFHAUSEN Patentanwälte

(56) Entgegenhaltungen:
- EP-A- 0 408 084
- DE-A- 4 137 695
- DE-A- 19 725 806

## Beschreibung

Die Erfindung betrifft eine Auswerteschaltung für zwei Schwingkreissensoren mit je einem gedämpften Schwingkreis gemäß dem Oberbegriff des Anspruchs 1.

Der gedämpfte Schwingkreis weist wenigstens eine Induktivität und eine Kapazität mit einen Dämpfung auf, die insbesondere durch einen Rotor mit in Drehrichtung wechselnden elektromagnetischen Eigenschaften beeinflussbar ist, und die durch eine Impulsflanke anregbar und deren Anzahl von Schwingungen bis zum Unterschreiten eines vorgebbaren Schwellenwertes über eine Zählschaltung erfassbar sind, wobei der erste Schwingkreis durch einen ersten und der zweite Schwingkreis durch einen zweiten Transistor kurzschließbar sind, die abwechselnd geschaltet werden derart, dass beim Anregen des einen Schwingkreises der andere kurzgeschlossen wird.

Es ist bekannt, Drehbewegungen und Drehrichtungen eines Rotors, beispielsweise in einem Durchflussmengenzähler, durch Näherungssensoren zu erfassen. Die Näherungssensoren sind als Schwingkreissensoren ausgebildet und umfassen einen Schwingkreis mit einer Kapazität und einer Induktivität. Der Rotor weist in Drehrichtung wechselnde elektromagnetische Eigenschaften auf, so dass die Induktivität und die Dämpfung des Schwingkreises in Abhängigkeit von der Stellung des Rotors beeinflusst werden. Die Stellung des Rotors und dessen Drehgeschwindigkeit kann somit mit hinreichender Genauigkeit erfasst werden.

Im einzelnen kann dabei so vorgegangen werden, dass die Anzahl der gedämpften Schwingungen des Schwingkreises bis zum Erreichen eines Schwellenwertes gezählt werden. Bei einer hohen Anzahl von Schwingungen befindet sich der wenig dämpfende Abschnitt des Rotors im Erfassungsbereich des Sensors, und bei einer niedrigen Anzahl befindet sich der stärker dämpfende Abschnitt des Rotors im Erfassungsbereich des Sensors.

Zusammen mit der Zykluszeit der Messungen kann die Umdrehungsgeschwindigkeit ermittelt werden.

Eine solche Auswerteschaltung ist beispielsweise aus der DE 41 37 695 C2 bekannt. Aus der DE 197 45 236 A1 und der DE 39 23 398 C1, auch veröffentlicht als EP 0 408 084 A1, ist es bekannt, durch eine besondere Ausbildung des Rotors und/oder durch eine besondere Anordnung der Näherungssensoren neben der Drehgeschwindigkeit auch die Drehrichtung festzustellen. Dort ist beschrieben, dass wenigstens zwei Schwingkreissensoren erforderlich sind, um die Drehrichtung festzustellen. Die Ansteuerung der benötigten Sensoren kann gleichzeitig oder aber auch getaktet und hintereinander erfolgen. Bei hinreichend kurzer Zykluszeit und Abklingzeit des angeregten Schwingkreises können auch schnelle Drehbewegungen zuverlässig erkannt und erfasst werden. Bei der in der DE 39 23 398 C1 bzw. EP 0 408 084 A1 beschriebenen, vergleichbaren Auswerteschaltung werden jeweils die Schwingkreise, die nicht angeregt werden, durch Transistoren als Kurzschlussschalter kurzgeschlossen. Die Impulse zum Betätigen der Kurzschlussschalter werden durch Steuerimpulse gegeben, die durch eine Taktgeberschaltung mit den Erregungsamplituden für die Anregung der Schwingkreise zeitlich aufeinander abgestimmt werden. Die Steuerimpulse und die Erregungssteuerimpulse werden als separate Signale von einer Ablaufsteuerung ausgegeben.

Eine andere Auswerteschaltung ist in der DE 197 25 806 A1 offenbart, Es wird ein Mikrocontroller beschrieben, der Schwingkreise von zwei Näherungssensoren anregt und der über einen entsprechenden Komparatoreingang eine Auszählung der Abklingschwingungen ermöglicht. Die Schwingkreise werden über Widerstände mit dem Komparatoreingang des Mikrocontrollers verbunden. Es besteht hier ein Nachteil dahingehend, dass diese ohm'schen Widerstände die Dämpfung des Schwingkreises maßgeblich bestimmen, so dass die Beeinflussung der gesamten Dämpfung durch den sich drehenden Rotor relativ klein und entsprechend schwer auswertbar ist.

Der Erfindung liegt die Aufgabe zugrunde, eine Auswerteschaltung für zwei Näherungssensoren so auszubilden, dass eine gegenseitige Beeinflussung der parallel wirkenden Schwingkreise mit wenig Schaltungsaufwand vermieden wird. Ferner soll das Nutzsignal aufgrund der Drehbewegung des Rotors und der daraus resultierenden Änderung der Dämpfung besser erfasst werden.

Die Aufgabe wird gemäß der Erfindung mit den Merkmalen des Anspruchs 1 gelöst. Dies hat den Vorteil, dass von dem nicht angeregten Schwingkreis Einflüsse auf andere elektronische Elemente vermieden werden können. Insbesondere kann der kurzgeschlossene Schwingkreis nicht den parallelen Schwingkreis beeinflussen.

Es ist mit einer solchen Schaltung vor allem möglich, diese mit einem einzigen Mikrocontroller zu kombinieren und zu steuern. Gemäß der Erfindung ist vorgesehen, dass der erste und der zweite Schwingkreis abwechselnd durch einen ersten und einen zweiten Portausgang eines Mikrocontrollers anregbar sind und der erste Transistor durch den zweiten Portausgang und der zweite Transistor durch den ersten Portausgang des Mikrocontrollers abwechselnd geschaltet werden, um den zugeordneten Schwingkreis kurzzuschließen. Der Schaltungsaufwand und auch der Energieverbrauch kann damit wesentlich reduziert werden.

Es kann vorgesehen werden, dass der Schwingkreis über einen kapazitiven Spannungsteiler mit dem Eingang der Zählschaltung verbunden ist. Diese Anordnung hat den Vorteil, dass die für die Aufschaltung des Schwingkreises auf eine Zählschaltung, die in der Regel einen Komparator und eine Zähler umfasst, keine zusätzlichen ohm'schen Widerstände benötigt werden. Die Eigendämpfung des Schwingkreises kann somit minimiert werden, so dass die Änderung der Dämpfung nur aufgrund des sich drehenden Rotors mit dessen sich ändernden elektromagnetischen Eigenschaften relativ groß ist.

Der kapazitive Spannungsteiler kann zudem so ausgelegt sein, dass die der Zählschaltung zugeführte Spannung auf ein Maß reduziert wird, dass diese an den Komparatoreingang des Mikrocontrollers angelegt werden kann. Insbesondere kann die Spannung auf den zulässigen Eingangsspannungsbereich eines Porteingangs, also häufig die Betriebsspannung, beschränkt werden. Dies kann beispielsweise dadurch erreicht werden, dass der Spannungsteiler zwei gleiche in Reihe geschaltete Kapazitäten umfasst.

Es ist daher zum anderen möglich, dass die Zählschaltung ebenfalls in dem Mikrocontroller integriert ist und der Schwingkreis über den Spannungsteiler mit dem entsprechenden Eingang für die Zählschaltung mit dem Mikrocontroller verbunden ist. Die gesamte Auswerteschaltung setzt sich daher lediglich aus dem Mikrocontroller und dem oder den Schwingkreissensoren zusammen, die aus herkömmlichen Standardbauteilen bestehen können. Weitere aufwendige elektronische Bauteile, wie ein ASIC, der ansonsten zwischen Mikrocontroller und Schwingkreise geschaltet werden müsste, um eine Steuerung der Schwingkreise und ein Auszählen der Schwingkreise bei höheren Spannungen zu ermöglichen, werden nicht mehr benötigt. Hier wird ein weiterer Vorteil der erfindungsgemäßen Schaltung deutlich, da auch bei zwei anzusteuernden Schwingkreisen nur ein Mikrocontroller mit einem Komparator und einem Zähler erforderlich ist.

Ferner ist es möglich dass der kapazitive Spannungsteiler eine erste Kapazität im ersten Schwingkreissensor und eine zweite Kapazität im zweiten Schwingkreissensor besitzt, die so mit den ersten und zweiten Transistoren zum Kurzschließen der jeweiligen Schwingkreise verbunden sind, dass beim Kurzschließen des ersten Schwingkreises die erste Kapazität in Reihe mit der zweiten Kapazität geschaltet wird und umgekehrt derart, dass jeweils ein Schwingkreis über den dadurch gebildeten Spannungsteiler mit dem Auswerteeingang des Mikrocontrollers verbunden ist. Durch diese Maßnahmen wird der Schaltungsaufbau weiter optimiert. Es werden insgesamt sehr wenige Bauteile erforderlich. Dennoch wird zuverlässig erreicht, dass eine Beeinflussung der einzelnen Schwingkreise untereinander nicht auftritt.

Die Erfindung wird im folgenden anhand der schematischen Zeichnung näher erläutert. Es zeigen:
Fig. 1 eine Schaltung für einen Schwingkreissensor und
Fig. 2 eine erfindungsgemäße Schaltung für zwei Schwingkreissensoren.

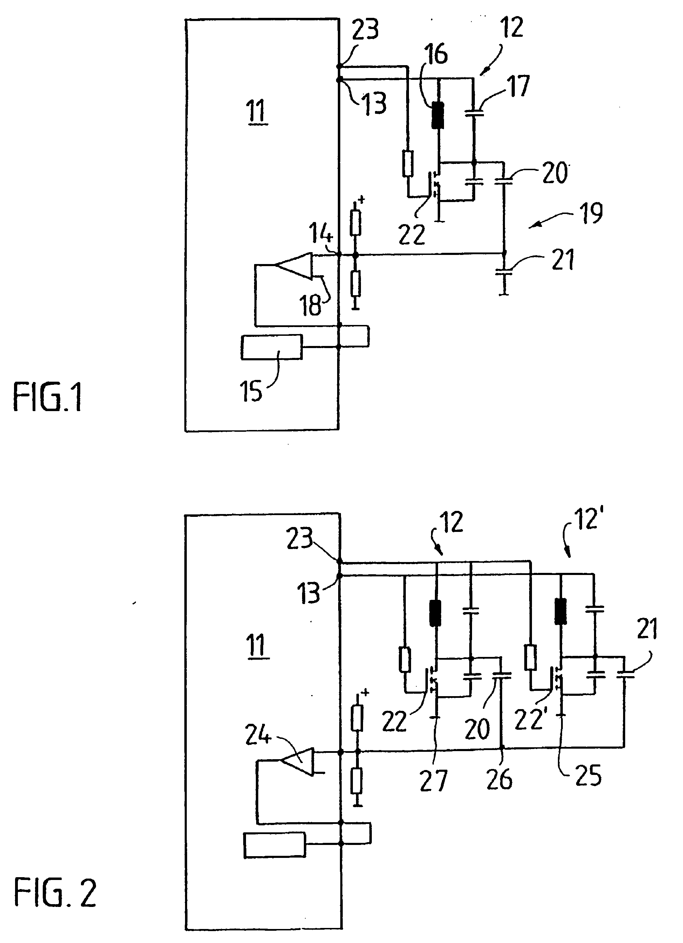

Die in Fig. 1 gezeigte Auswerteschaltung für einen Schwingkreissensor umfasst einen Mikrocontroller 11, der in der Lage ist, einen Impuls zum Anregen eines Schwingkreises 12 an einem Portausgang 13 auszugeben. Ferner enthält der Mikrocontroller wenigstens einen Komparatoreingang 14 und einen internen Zähler 15. Solche Mikrocontroller sind allgemein bekannt und bedürfen daher keiner weiteren Erläuterung. Insbesondere ist es möglich, solche Mikrocontroller auf die individuellen Bedürfnisse, wie Zykluszeit und dergleichen abzustimmen. In der Zeichnung sind zudem nur die erforderlichen Bauelemente dargestellt, und es werden nur die für die Schaltung wesentlichen Elemente beschrieben. Die weiterhin zwingend notwendigen Bauteile, wie Spannungsversorgung, Sensorengehäuse und dergleichen sind der Übersichtlichkeit halber nicht gezeigt.

Der Schwingkreis 12 ist Bestandteil eines Näherungssensors, wie er zur Erfassung von Rotordrehungen bei Durchflussmengenzähler und Wärmemengenzähler allgemein bekannt ist. Es sind eine Induktivität 16 und eine Kapazität 17 vorhanden, die über den Portausgang 13 zur Schwingung angeregt werden können. Der Rotor besitzt in Drehrichtung wechselnde elektromagnetische Eigenschaften, die die Dämpfung des Schwingkreises unterschiedlich beeinflussen. Befindet sich der Rotor mit seinem stärker dämpfenden Abschnitt im Bereich des Näherungssensors, so wird die Schwingung entsprechend schneller abklingen, und die Anzahl der Schwingungen bis zum Erreichen einer Referenzspannung, die an dem Komparatoreingang 18 anliegt, ist entsprechend klein. Befindet sich der schwächer oder nicht dämpfende Abschnitt des Rotors im Bereich des Sensors, ist diese Anzahl größer. Die Anzahl der Abklingschwingungen gibt demnach eine Aussage über die aktuelle Stellung des Rotors und kann zusammen mit der Zykluszeit zur Ermittlung der Drehzahl des Rotors herangezogen werden.

Die maximale Spannung, die an dem Komparatoreingang 14 angelegt werden kann, darf bei handelsüblichen Mikrocontrollern 11 in der Regel die Port-Ausgangsspannung nicht übersteigen. Eine Anregung des Schwingkreises mit der Impulsspannung bewirkt aber eine Schwingung von 0 bis zum doppelten Wert der Impulsspannung. Übliche Spannungen liegen bei +3 V, so dass die Spannung des Schwingkreises zwischen 0 und +6 V schwingt.

Es ist daher ein Spannungsteiler 19 vorgesehen, der sich aus zwei Kapazitäten 20, 21 zusammensetzt. Im einzelnen ist die Anordnung so getroffen, dass beide Kapazitäten gleich groß sind, so dass eine Halbierung der Schwingkreisspannung erfolgt, die dann an den Komparatoreingang 14 angelegt werden kann. Eine kapazitive Spannungsteilung ist bei den auftretenden Wechselströmen möglich. Insgesamt erhält die für den Schwingkreis 12 maßgebliche Schaltung wenig ohm'sche Widerstände, so dass die eigene Dämpfung gering bleibt. Damit wird der Einfluss der wechselnden magnetischen Eigenschaften des Rotors auf die Dämpfung relativ größer und kann besser erfasst werden.

Ferner ist ein Transistor 22 vorgesehen, der durch einen zweiten Portausgang 23 des Mikrocontrollers gesteuert wird. Hiermit kann der Schwingkreis kurzgeschlossen werden, um Beeinflussungen anderer Bauteile und Schaltkreise zu verhindern. Dies ist insbesondere bei dem Einsatz von mehreren Schwingkreisen für mehrere Näherungssensoren zweckmäßig.

Fig. 2 zeigt eine erfindungsgemäße Auswerteschaltung für die Steuerung und Auswertung von zwei Schwingkreisen 12 und 12'. Diese Schaltung baut auf der Schaltung gemäß Fig. 1 auf, und es werden gleiche und gleichwirkende Bauelemente mit gleichen Bezugszeichen versehen. Der zweite Schwingkreis 12' wird durch den zweiten Portausgang 23 des Mikrocontrollers angeregt. Im einzelnen ist die Anordnung so getroffen, dass der Portausgang 13, der den ersten Schwingkreis 12 anregt, den Kurzschlusstransistor 22' des zweiten Schwingkreises 12' schaltet. Der Portausgang 23, der den zweiten Schwingkreis 12' anregt, schaltet auch den Transistor 22 des ersten Schwingkreises 12. Dies hat zur Folge, dass bei angeregtem ersten Schwingkreis 12 der zweite Schwingkreis 12' kurzgeschlossen ist, und umgekehrt. Eine gegenseitige Beeinflussung der Schwingkreise wird damit zuverlässig vermieden.

Durch diese Schaltung kann auch der Spannungsteiler mit den Kapazitäten 20, 21 in die beiden Schwingkreise 12, 12' integriert werden, so dass der Komparator 24 für beide Schwingkreise eingesetzt werden kann. Schaltet der Transistor 22' des zweiten Schwingkreises 12' auf Kurzschluss, so wird der Spannungsteiler zwischen der Kapazität 20, der Kapazität 21 und dem Massepunkt 25 gebildet. Die Spannung des ersten, dann aktiven Schwingkreises für den Komparator liegt am Punkt 26 an. Schaltet der Mikrocontroller den Port 23 zum Anregen des zweiten Schwingkreises 12' und den Transistor 22 zum Stillsetzen des ersten Schwingkreises 12 auf Kurzschluss, so wird der Spannungsteiler zwischen der Kapazität 20, der Kapazität 21 und dem Massepunkt 27 gebildet. Die Spannung des zweiten, dann aktiven Schwingkreises 12' für den Komparator liegt ebenfalls am Punkt 26 an.

Es ist offensichtlich, dass mit dieser Auswerteschaltung zwei Schwingkreise taktweise angesteuert und ausgewertet werden können. Eine gegenseitige Beeinflussung findet nicht statt, und die Eigendämpfung wird gering gehalten, so dass der Einfluss des Rotors auf die Dämpfung der Schwingkreise relativ größer wird. Dennoch ist eine Spannungsteilung möglich, so dass der Einsatz nur eines Mikrocontrollers mit einem Komparator und einem Zähler sowie zwei Ports für die Anregung und die Auszählung möglich ist. Da zwei Schwingkreise gesteuert werden können, ist nicht nur die Erfassung der Drehzahl sondern auch die Erfassung der Drehrichtung des Rotors möglich. Hierzu können die Sensoren in bezug auf die Drehrichtung des Rotors in einem Winkel von 90° zueinander angeordnet sein, während der Rotor zu einer Hälfte aus einem die Dämpfung stärker und zu der anderen Hälfte aus einem die Dämpfung schwächer oder nicht beeinflussenden Material besteht. Durch Erfassung der nacheinander auftretenden Änderung der Dämpfung an den Sensoren kann die Drehrichtung ermittelt werden.

## Patentansprüche

1. Auswerteschaltung für zwei Schwingkreissensoren mit je einem gedämpften Schwingkreis (12, 12'), der wenigstens eine Induktivität (16) und eine Kapazität (17) mit einer Dämpfung aufweist, die insbesondere durch einen Rotor mit in Drehrichtung wechselnden elektromagnetischen Eigenschaften beeinflussbar ist, und die durch eine impulsflanke anregbar und deren Anzahl von Schwingungen bis zum Unterschreiten eines vorgebbaren Schwellenwertes über eine Zählschaltung (24, 15) erfassbar sind, wobei der erste Schwingkreis durch einen ersten und der zweite Schwingkreis durch einen zweiten Transistor (22, 22') kurzschließbar sind, die abwechselnd geschaltet werden derart, dass beim Anregen des einen Schwingkreises der andere kurzgeschlossen wird, **dadurch gekennzeichnet, dass** der erste und der zweite Schwingkreis abwechselnd durch einen ersten und einen zweiten Portausgang (13, 23) eines Mikrocontrollers (11) anregbar sind und der erste Transistor (22) durch den zweiten Portausgang (23) und der zweite Transistor (22') durch den ersten Portausgang (13) des Mikrocontrollers (11) abwechselnd geschaltet werden, um den zugeordneten Schwingkreis kurzzuschließen.

2. Auswerteschaltung nach Anspruch 1, **dadurch gekennzeichnet, dass** die Zählschaltung (24, 15) in dem Mikrocontroller (11) integriert ist und der Schwingkreis über einen Spannungsteiler über den entsprechenden Eingang mit dem Mikrocontroller verbunden ist.

3. Auswertschaltung nach Anspruch 2, **dadurch gekennzeichnet, dass** die Schwingkreise über einen kapazitiven Spannungsteiler (19, 20, 21) mit dem Eingang der Zählschaltung (14) verbunden sind.

4. Auswerteschaltung nach Anspruch 3, **dadurch gekennzeichnet, dass** der Spannungsteiler (19) zwei gleiche in Reihe geschaltete Kapazitäten (20, 21) umfasst.

5. Auswerteschaltung nach einem der Ansprüche 3 oder 4, **dadurch gekennzeichnet, dass** der kapazitive Spannungsteiler eine erste Kapazität (20) im ersten und eine zweite Kapazität (21) im zweiten Schwingkreissensor besitzt, die so mit den ersten und zweiten Transistoren (22, 22') zum Kurzschließen der jeweiligen Schwingkreise verbunden sind, dass beim Kurzschließen des ersten Schwingkreises (12) die erste Kapazität (20) in Reihe mit der zweiten Kapazität (21) geschaltet wird und umgekehrt derart, dass jeweils ein Schwingkreis (12, 12') über den dadurch gebildeten Spannungsteiler mit dem Auswerteeingang (14) des Mikrocontrollers (11) verbunden ist.

## Claims

1. An evaluation circuit for two oscillating circuit sensors, each with a damped oscillating circuit (12, 12'), which has at least one inductance (16) and one capacitance (17) with damping, which in particular can be influenced by means of a rotor with electromagnetic properties alternating in the direction of rotation, and which can be excited by means of a pulse edge, and whose number of oscillations before falling below a prescribable threshold value can be recorded via a counter circuit (24, 15), wherein
the first oscillating circuit can be short-circuited by means of a first transistor (22) and the second oscillating circuit can be short-circuited by means of a second transistor (22'); these are alternately switched such that when one oscillating circuit is excited the other is short-circuited,
**characterised in that**,
the first and second oscillating circuit can be alternately excited by means of a first and a second port output (13, 23) of a microcontroller (11), and the first transistor (22) is alternately switched by the second port output (23) and the second transistor (22') by the first port output (13) of the microcontroller (11), in order to short-circuit the associated oscillating circuit.

2. The evaluation circuit in accordance with Claim 1, **characterised in that**, the counter circuit (24, 15) is integrated in the microcontroller (11) and the oscillating circuit is connected via a voltage divider with the microcontroller via the corresponding input.

3. The evaluation circuit in accordance with Claim 2, **characterised in that**, the oscillating circuits are connected via a capacitive voltage divider (19, 20, 21) with the input of the counter circuit (14).

4. The evaluation circuit in accordance with Claim 3, **characterised in that**, the voltage divider (19) comprises two equal capacitances (20, 21) connected in series.

5. The evaluation circuit in accordance with one of the Claims 3 or 4, **characterised in that** the capacitive voltage divider possesses a first capacitance (20) in the first oscillating circuit sensor, and a second capacitance (21) in the second oscillating circuit sensor; these are connected with the first and second transistors (22, 22') for purposes of short-circuiting the respective oscillating circuits, such that when the first oscillating circuit (12) is short-circuited the first capacitance (20) is connected in series with the second capacitance (21), and vice versa, such that in each case an oscillating circuit (12, 12') is connected via the voltage divider thereby formed with the evaluation input (14) of the microcontroller (11).

## Revendications

1. Circuit d'analyse pour deux capteurs à circuit oscillant comprenant chacun un circuit oscillant (12, 12') amorti, qui présente au moins une inductance (16) et une capacité (17) avec un amortissement, qui peut être influencé en particulier par un rotor avec des propriétés électromagnétiques variant dans le sens de rotation, et qui peut être excité par un flanc d'impulsion et dont le nombre d'oscillations peut être enregistré jusqu'à passer au-dessous d'une valeur seuil prédéfinissable au moyen d'un circuit de comptage (24, 15), le premier circuit oscillant et le second circuit oscillant pouvant être court-circuités respectivement par un premier et un second transistor (22, 22'), qui sont commutables en alternance, de telle sorte que lors de l'excitation de l'un des circuits oscillants, l'autre est court-circuité, **caractérisé en ce que** le premier et le second circuit oscillant peuvent être excités alternativement par une première et une seconde sortie de port (13, 23) d'un microcontrôleur (11) et le premier transistor (22) et le second transistor (22') sont commutés alternativement par la seconde sortie de port (23) et par la première sortie de port (13) du microcontrôleur (11), afin de court-circuiter le circuit oscillant attribué.

2. Circuit d'analyse selon la revendication 1, **caractérisé en ce que** le circuit de comptage (24, 15) est intégré dans le microcontrôleur (11) et le circuit oscillant est relié par un diviseur de tension via l'entrée appropriée avec le microcontrôleur.

3. Circuit d'analyse selon la revendication 2, **caractérisé en ce que** les circuits oscillants sont reliés par un diviseur de tension (19, 20, 21) capacitif à l'entrée du circuit de comptage (14).

4. Circuit d'analyse selon la revendication 3, **caractérisé en ce que** le diviseur de tension (19) comprend deux capacités (20, 21) identiques, montées en série.

5. Circuit d'analyse selon l'une des revendications 3 ou 4, **caractérisé en ce que** le diviseur de tension capacitif présente une première capacité (20) dans le premier capteur à circuit oscillant et une seconde capacité (21) dans le second capteur à circuit oscillant, qui sont reliées ainsi aux premiers et seconds transistors (22, 22') pour court-circuiter les circuits oscillants respectifs, de sorte que, lors du court-circuitage du premier circuit oscillant (12), la première capacité (20) est montée en série avec la seconde capacité (21) et inversement, de telle sorte qu'à chaque fois un circuit oscillant (12, 12') est relié par le diviseur de tension ainsi formé à l'entrée d'analyse (14) du microcontrôleur (11).
